# EUROPEAN PATENT APPLICATION

(11) **EP 4 083 822 A1**
(43) Date of publication of application: **02.11.2022**
(21) Application number: 21171438.1
(22) Date of filing: 30.04.2021
(51) Int. Cl.: G06F 17/40, G05B 23/02, G06F 11/30

(54) **CONTINUOUS FLOW ENGINE DATA STREAM AND BATTERY-BASED POWER STORAGE FACILITY DATA STREAM PROCESSING METHOD AND DATA MANAGEMENT DEVICE**

(71) Applicant: Siemens Energy Global GmbH & Co. KG, 81739 München (DE)
(72) Inventor: Gottschalk, Ralph, 07366 Pottiga (DE); Schuh, Martina, 91086 Aurachtal (DE)

(57) **Abstract**

The present method refers to a method to process data streams of multiple continuous flow engines and/or a battery-based power storage facility providing an improved processing as well as improved possibilities to make use of such data. Herein, the method utilizes a data management device to store and forward the data in a highly efficient way. Said data management devices can be utilized to provide a system being beneficially utilized to further increase the possibilities in this context. To realize this a corresponding computer program product is utilized enabling a data management device to execute the inventive method.

## Description

The present method refers to a method to process data streams of multiple continuous flow engines and/or data streams of a battery-based power storage facility utilizing a data management device to store and forward the data in a highly efficient way. Furthermore, the present invention refers to a data management device being adapted to realize such method. Additionally, the present invention refers to a system containing multiple data management devices to establish a data network. Furthermore, the present invention refers to a computer program product to cause an inventive data management to execute an inventive method.

While the generation, storage and distribution of data is a common matter today several fields till suffer from grave drawbacks to make use of all data being generated and stored. Continuous flow engines create a huge amount of data like sensor data during monitoring said continuous flow engine. Modern continuous flow engines provide an even increased amount of detailed data to be reviewed and analyzed. While such data is highly beneficially to early identify problems and note chances for optimizations it is a big challenge to make such data available as the amount rises. This even increases in case the utilization of the data of multiple sites is intended. Herein, existing solutions lack a suitable processing system to make such data available.

Similar problems are observed for battery-based power storage facilities consisting of a plurality of connected batteries utilized to flexibly store electric power. Corresponding facilities suffer from multiple batteries being required to be coupled to provide the demanded voltage and the like. However, minor defect in a single battery results in the whole coupled branch of batteries being required to be shut down. Monitoring such battery-based power storage facility, however, is a major challenge to be solved as the flood to data to be monitored requires a highly sophisticated and extensive server system rendering the benefit obtained by such facility quite low. Also, such facility requires an improved possibility to handle the data available and make good use of it to avoid significant losses while keeping the monitoring effort at bay.

This and further problems are solved by the products and methods as disclosed hereafter and in the claims. Further beneficial embodiments are disclosed in the dependent claims and the further description and figures. These benefits can be used to adapt the corresponding solution to specific needs or to solve additional problems.

According to one aspect the present invention refers to a method of processing data streams of at least two, more preferred at least four, even more preferred at least seven, continuous flow engines and/or data streams of a battery-based power storage facility containing at least 10 battery arrangements utilizing a data management device containing a processing unit and a data storage, wherein the at least 10 battery arrangements are working independently from each other to provide the required power, wherein
- the at least two continuous flow engines and/or the at least 10 battery arrangements provide data streams, preferably sensor data streams, to be analyzed,
- the data management device retrieves the data streams of the at least two continuous flow engines and/or the at least 10 battery arrangements and stores data of the data streams as historical data in a data storage,
- the data management device upon request forwards historical data, wherein the historical data is forwarded in a binary format.

It was noted that the application in the context of continuous flow engines is typically especially emphasized. According to a further aspect the present invention refers to a method of processing data streams of at least two, more preferred at least four, even more preferred at least seven, continuous flow engines utilizing a data management device containing a processing unit and a data storage, wherein
- the at least two continuous flow engines provide data streams, preferably sensor data streams, to be analyzed,
- the data management device retrieves the data streams of the at least two continuous flow engines and stores data of the data streams as historical data in a data storage,
- the data management device upon request forwards historical data, wherein the historical data is forwarded in a binary format.

It was noted that utilizing the binary format for such data is surprisingly beneficial. The data acquired for such continuous flow engines is typically characterized by data sets being beneficially processed and transported this way. Herein, not only a significant reduction of the data amount could be achieved. In fact, switching to such data format enables to significantly the overall processing of data as well as retrieval. Although, this is not to be understood to limit the present invention it is assumed that the average data created for such continuous flow engine is beneficially processed in such way resulting in some significant benefit when applying the inventive method and especially the specific embodiments as specified hereafter to a continuous flow engine system.

The phrase "data stream provided by a continuous flow engine" naturally does not only refer to data streams generated by the continuous flow engine itself. The person skilled in the art understands such phrase to refer to data streams related to such continuous flow engine. Herein, the auxiliaries required to utilize such continuous flow engine are also providing data streams like the temperature of the fuel, the burning and boiling processes in a boiler providing steam for a steam turbine, the temperature of the air in the air inlet of a gas turbine, the oil pressure of hydraulic components controlling various elements required for the utilization of such continuous flow engine, the composition of a fluid to be compressed by a compressor, and the like.

According to a further aspect the present invention refers to a data management device containing a processing unit and at least one data storage, wherein the data management device is adapted to realize an inventive method, wherein the data management device contains a processing unit and a data storage, wherein the data storage contains an API being adapted to output data in a binary format.

According to a further aspect the present invention refers to a system containing at least two, more preferred at least three, even more preferred at least five, inventive data management devices, wherein the at least two data management devices are adapted to exchange historical data.

According to a further aspect the present invention refers to a computer program product, tangibly embodied in a machine-readable storage medium, including instructions operable to cause an inventive data management device to execute an inventive method.

To simplify understanding of the present invention it is referred to the detailed description hereafter and the figures attached as well as their description. Herein, the figures are to be understood being not limiting the scope of the present invention, but disclosing preferred embodiments explaining the invention further.

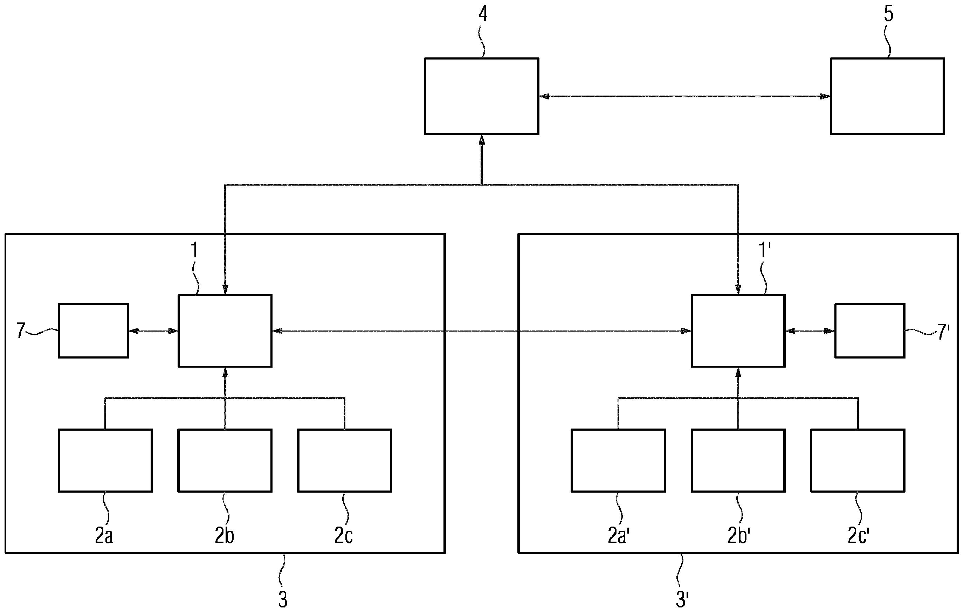

Fig. 1 shows a scheme of an inventive method showing the data processing within an industrial power plant and forwarding said data to be remotely analyzed.

Preferably, the embodiments hereafter contain, unless specified otherwise, at least one processor and/or data storage unit to implement the inventive method.

Unless specified otherwise terms like "calculate", "process", "determine", "generate", "configure", "reconstruct" and comparable terms refer to actions and/or processes and/or steps modifying data and/or creating data and/or converting data, wherein the data are presented as physical variable or are available as such.

The term "data storage" or comparable terms as used herein, for example, refer to a temporary data storage like RAM (Random Access Memory) or long-term data storage like hard drives or data storage units like CDs, DVDs, USB sticks and the like. Such data storage can additionally include or be connected to a processing unit to allow a processing of the data stored on the data storage.

Continuous flow engines are characterized by a continuous stream flowing through said engine. For example, such continuous flow engine utilizes a stream of fluid flowing through the engine to rotate a rotor that in turn converts the kinetic energy into electricity. Such fluid stream can be generated by means of burning a fuel using burner in a gas turbine or boiling a liquid like water in a steam generator. Examples of corresponding continuous flow engines are gas turbines and steam turbines. Alternatively, such continuous flow engine utilizes energy to move a fluid in said continuous flow engine like in a compressor. Herein, such compressor is often associated to a fridge being an application of the daily life. However, compressors are also utilized in industrial applications like in the chemical industry to continuously compress a fluid like in a cracking process to allow a further processing.

It was noted that such continuous flow engines benefit significantly from the inventive method. It is assumed that the specific data created in such engines is especially suitable to be processed herewith. Supposedly, the amount of data collected for such engines, the data typically collected, the behavior of these engines and correlated created data, as well as many other factors result in the surprisingly high benefit obtained when applying the inventive method in this context.

A battery-based power storage facility contains a plurality of battery arrangement consisting of connected batteries to provide the required output. Such battery-based power storage facilities can be utilized to compensate for a lack of power resulting, for example, from fluctuations during the power generation utilized renewable energy. Herein, a significant number of, for example, lithium batteries need to be coupled to provide the required output. While such system is flexible and a very good addition to supporting the renewable energies with high-speed adaptable power generation units like gas turbines the battery-based power storage facility suffers from the required processing of data to monitor such facility and its batteries.

According to one aspect the present invention refers to a method as described above.

According to further embodiments it is preferred that values contained in the data streams are at least partially stored as changes over time. Herein, the absolute value is no stored continuously, but is typically stored as change in relation to a foregoing state. For example, how the value changed in comparison to the foregoing value noting down the change and the time said change occurred. For example, it can be preferred that least 90%, more preferred at least 95%, even more preferred at least 99%, of the correspondingly stored data is stored as value change, based on the total amount of data sets of said value data as contained in the historical database.

According to further embodiments it is preferred that the data streams are buffered in RAM data storage of the data management device. Despite the relatively high price it is surprisingly beneficial to utilize RAM storage for buffering the data streams. It was noted that the increased swiftness to easily adapt and speed up the data processing easily outweighs the increase price and effort in this context.

According to further embodiments it is preferred that the at least one data stream of each continuous flow engine, preferably all data streams of each continuous flow engine, and/or the data streams of the battery-based power storage facility more preferred for each tag, are buffered in reserved RAM data storage areas of the data management device. For example, this can be realized by extending a Microsoft.Net class library. Typically, it is preferred that such buffering is applied to continuous flow engine-based systems.

According to further embodiments it is preferred that a circular buffer is used for buffering the data streams. Typically, it is preferred that at least 50%, more preferred at least 75%, even more preferred 90%, of the data streams are buffered utilizing a circular buffer. Typically, it is preferred that all data streams are buffered by such circular buffer. For the sake of completeness, it is pointed out that the aforementioned percentage of the data streams is based on the number of data streams and not the amount of data of said data streams.

According to further embodiments it is preferred that the circular buffer is a self-maintaining circular buffer. Such self-maintaining circular buffer covers all value changes of a tag for a specified period of time. Typically, it is preferred to prevent an unlimited growth of such circular buffer by defining a size and/or time range. This secures that it is always possible to swiftly and concurrently access the near time history of each tag.

According to further embodiments it is preferred that it is preferred that the buffered data is stored as value changes over time. It was noted that apparently the highly continuous utilization of the continuous flow engines and the behavior of the batteries in a battery-based power storage facility allow to significantly reduce the required data storage this way. This allows to easily realize the quick data storage utilizing a low amount of RAM data storage enabling to provide a significant amount of system resources, for example, to simultaneously process that data or respond to, for example, a request received from a remote analytical device.

According to further embodiments it is preferred that the data management device utilizes a http/2 based application programming interface (API) to request the historical data. For example, such API can be gRPC. For many applications it is typically preferred that the processed data is encoded utilizing protocol buffer encoding. It was noted that such API in combination with the specified data sources provides high performance. Furthermore, such API enables to allow an easy access by means of a different computer simply by opening a port as required. Additionally, it was noted that such API is able to run using almost any operating system.

According to further embodiments it is preferred that the data management device utilizes an API application programming interface (API), wherein the API can be utilized to create plugins for retrieving data from the industrial plant. Herein, the plugins can be created by internal users being located, for example, at the site of the continuous flow engine and data management device or by external users being located remotely. The term "plugin" as used herein preferably refers to a class library that implements a specified interface and implements code to retrieve data from a specific data source or a specific protocol. Such plugin preferably connects certain data sources and the data management device to transfer data to a specified location preferably including a processing of the data before it is transferred from the data management device to a specified location. Especially, the possibility of the inventive method to also allow such creation of plugins by an external user is highly beneficial.

According to further embodiments it is preferred that the plugin utilizes at least one communication protocol stored on the data management device. Herein, commonly available protocols can be utilized. For example, such protocols can be selected from MODBUS, IEC 61850, IEC 60870, S7 protocol (RFC 1006), or OSIsoft PI AF SDK.

According to further embodiments it is preferred that certificates are exchanged between a client and the data management device before the data management device forwards the historical data to the client. Such client can be, for example a centralized analytical device retrieving historical data from a plurality of data management devices or a user interface utilized by a user to retrieve historical data locally or preferably remotely.

According to further embodiments it is preferred that requesting and forwarding the historical data utilizes an SSL authentication and/or a TLS authentication between a client requesting the historical data and the data management device. It was noted that corresponding authentication system allow to very beneficially realize the data exchange between a client and the data management device.

According to further embodiments it is preferred that the historical data is at least partially cached by the data management device. Typically, it is preferred that predefined priority data is cached. For example, such priority data can be selected based on commonly requested and/or most recent data being typically be very often requested within a short time frame to, for example, take action in case an alert requires an immediate response. It was noted that the inventive method allows to reduce the workload, for example, of available RAM data storage available. Such RAM data storage or comparable data storage can, thus, be beneficially utilized to cache an amount of historical data enabling to further improve the benefit obtained. For example, under normal conditions of typical applications it becomes possible to cache the historical data to be written to smoothen the writing process of the historical data as well as allow a more time-consuming data processing resulting in a delayed storing from time to time. Furthermore, corresponding historical most likely to be requested can be retrieved in advance to further increase the historical data retrieval. Surprisingly, such means can be utilized for the applications as described herein despite the typically very limited resources based on the processing power set free by means of the inventive method.

According to further embodiments it is preferred that the historical data being stored on the data storage contains historical sensor data, wherein the historical sensor data is at least partially protected against tampering. Typically, it is preferred that all historical sensor data is protected against tampering. For example, such protection can be achieved by restricting the access of the historical sensor data, for example, by encrypting the data. Additionally or alternative, such historical sensor data can be protected against tampering by enabling it identify changes utilizing, for example, hash keys and the like. It was noted that utilizing such protection is especially beneficial as changes of the sensor data made for various reasons easily result in significant damages in such industrial plant.

According to further embodiments it is preferred that the historical data is stored in a binary format on the data storage. Directly storing the data in binary format is typically beneficial despite the significant additional effort to convert the data when storing the data. Especially, the significantly reduced size of the data is very beneficial as it was noted that despite the low price of corresponding data storages the speed to retrieve such data on demand is significantly increased this way.

According to further embodiments it is preferred that the historical data is stored in at least two data formats, preferably wherein one format is a time series data format, more preferred timescale time series data format. Such time series data base format is typically preferred to be combined with storing further data in binary data format. It was noted that storing the historical data in a time series data format is typically beneficial and enables to more efficiently organize and retrieve such data on short notice. Furthermore, it was noted that PostgreSQL time series data base format are typically very beneficial in this context. One example of such format is timescale. It was noted that such time series data base format provides many benefits when utilized for the inventive method. For example, it allows to keep the speed of storing new data independent from the size of the available data base. This is especially beneficial for the application cases as specified herein as not only the amount of data generated per day is tremendous, but this generation of data also keeps on for a very prolonged period of time only briefly interrupted by maintenance or upgrade actions. Therefore, utilizing such format is very beneficial for such applications. Furthermore, it was noted that the data of such applications can be very efficiently retrieved from such data base format. Therefore, it was noted that taking into account the intended purpose such data base format surprisingly provided a very good overall performance.

According to further embodiments it is preferred that. the historical data is stored on the data storage in at least two different data archives, wherein at least one of the at least two different data archives contain raw data, and wherein at least one of the at least two data archives contains data generated by applications. It was noted that such split of the data into different archives is surprisingly beneficial. The benefit like the increased accessibility and writing speed as observed is attributed to the data created in the context of continuous flow engines and that the amount of data as well as data values in this context fits very well to provide such beneficial split. However, it has to be understood that this assumption is not meant to limit the invention, as the corresponding reason seems to be based on a number of reasons.

According to further embodiments it is preferred that the data management device automatically retrieves at least one raw data stream and at least one application data stream, wherein such raw data stream is a continuous data stream preferably generated by a sensor, and wherein such application data stream is data generated by an application. Such application data stream can be continuous or discontinuous, however, is characterized in that it does not represent a measure characteristic, but an output of an application being tasked to operate in connection to the continuous flow engine. For example, such application data can be controls parameters, alerts and/or evaluations of the state of the continuous flow engine.

According to further embodiments it is preferred that the data streams contain high frequency data. Such high frequency data is characterized by a high number of values in a given time period. Typically, it is preferred that such high frequency data provide at least 10 values per second, more preferred at least 30 values per second, even more preferred at least 100 value per second. For example, such high frequency data is vibrational data of a gas turbine or the like. It was noted that especially processing such data according to the method of the present invention is very beneficial and allows to, for example, achieve significant reduction of the access speed of historical data and the like. Especially, such embodiments can be beneficially combined with further embodiments herein like storing the data as value changes over time. For high frequency data of continuous flow engines a tremendous reduction of the file size can be achieved even further increasing the access speed of historical data.

According to further embodiments it is preferred that the data streams contain at least one raw data stream, wherein the at least one raw data stream is processed to provide an adapted frequency. For example, the frequency of a raw data stream is reduced to reduce the processing power to further process the raw data stream. It was noted that sensor data in the specified applications is not necessarily required to provide the originally possible resolution as at least under typical working conditions the sensors provide significant additional data not required to correctly evaluate the situation. Typically, it is preferred that such processing is situation dependent and allows to increase the frequency according to the specific situation and, for example, increase the frequency of stored data in alert situations.

According to further embodiments it is preferred that the data streams are grouped as at least two groups, wherein at least one of the at least two groups is adapted with regard to the update frequency. Such update frequency characterizes the frequency of new values being stored as historical data. It was noted that many data streams can easily be grouped this way and configured to provide a lower update frequency under specific conditions to adapt such processing with little effort without impairing the insight or reliability of such data. The values of such reduced update frequency modified data stream can be, for example, simply be based on values being selected from the measured values with an increased time interval. Such method is typically preferred as it required little to no processing power and provides reliable data. Alternatively, such reduction can be achieved by providing a mean value for the values within the selected time range. This provide the further benefit to balance out deviations and can be very beneficial for specific applications like data streams providing a significant fluctuation. According to further embodiments it is preferred that the data management device sends instructions to at least a part of the sources of the data streams, wherein the instructions contain a request to adapt the update frequency of the data streams. Surprisingly, such adaption can be easily automized allowing to significantly reduce the data streams and simplify their processing.

According to further embodiments it is preferred that the data management device creates a statistical dataset. Herein such statistical dataset contains at least one, more preferred at least two of the statistical values selected from the group consisting of a number of data sets of at least one data stream being summarized to provide the adapted update frequency, a number of values providing a specified quality, and a time dataset indicating the last change of a value of a data stream. Typically, it is especially preferred to create a time dataset indicating the last change of a value of a data stream.

According to further embodiments it is preferred that historical data is midterm historical data. The term "midterm" historical data preferably refers to historical data of at most the past 4 months, more preferred at most the past 3 months. It was noted that the inventive system is especially suitable to process such data in corresponding applications.

According to further embodiments it is preferred that the data management device communicates with a client,
wherein the communication includes requesting and forwarding the historical data,
wherein the communication is at least partially, preferably completely, secured against unallowed access. For example, such communication can be encrypted to ensure that in case of a remotely located client servers in between are unable to acquire the historical data. Such encryption can be based on a hardware encryption or software encryption. For many upgrade cases it is typically preferred to include a hardware encryption in the data management device to be directly installed. However, even in such case it is typically preferred to keep the option to switch to a software encryption in case the hardware encryption is corrupted or otherwise impaired.

According to further embodiments it is preferred that the data management device forwards the historical data to a further data management device receiving data streams from different continuous flow engines. Typically, it is even preferred that distanced data management devices communicate with each other. Herein, some remote system can be provided exchanging data at remote locations to improve, for example, predictions utilizing correspondingly acquired data.

According to further embodiments it is preferred that the at least two continuous flow engines contain at least two, more preferred at least four, even more preferred at least seven, gas turbines. It was noted that the data like especially sensor data acquired for such gas turbines is especially beneficially processed and stored utilizing the inventive method.

According to further embodiments it is preferred that the continuous flow engine is a compressor, a gas turbine, a steam turbine, or a combined cycle power device, more preferred a gas turbine, a steam turbine, or a combined cycle power device, even more preferred a gas turbine. As already stated above applying the inventive method for such applications is typically especially beneficial.

According to a further aspect the present invention refers to a data management device containing a processing unit and at least one data storage, wherein the data management device is adapted to realize an inventive method,
wherein the data management device contains a processing unit and a data storage,
wherein the data storage contains an API being adapted to output data in a binary format.

According to further embodiments it is preferred that the data management device is adapted to execute plugins being created utilizing an API stored on the data management device. It was noted that such data management device is highly beneficial to even further improve the possibilities and benefits provided by the inventive data management device.

According to further embodiments it is preferred that the data management device contains at least one protocol to be utilized by a plugin. Herein, commonly available protocols can be utilized. For example, such protocols can be selected from MODBUS, IEC 61850, IEC 60870, S7 protocol (RFC 1006), or OSIsoft PI AF SDK.

According to a further aspect the present invention refers to a system containing at least two, more preferred at least three, even more preferred at least five, inventive data management devices, wherein the at least two data management devices are adapted to exchange historical data.

According to further embodiments it is preferred that the data management devices are adapted to simultaneously forward historical data to a data analysis device.

According to a further aspect the present invention refers to a computer program product, tangibly embodied in a machine-readable storage medium, including instructions operable to cause an inventive data management device to execute an inventive method.

The following detailed description of the figure uses the figure to discuss illustrative embodiments, which are not to be construed as restrictive, along with the features and further advantages thereof.

Figure 1 shows a scheme of an inventive method showing the data processing within an industrial power plant and forwarding said data to be remotely analyzed. Herein, the gas turbines 2a, 2b, 2c, 2a', 2b', 2c' as examples of the continuous flow engines are located in two industrial power plants 3, 3'. The gas turbines 2a, 2b, 2c, 2a', 2b', 2c' generate a plurality of data streams that are forwarded to the corresponding data management device 1, 1' located at the corresponding industrial plant 3, 3'. The corresponding data management device 1, 1' processes the incoming data streams and stores the data as historical data in a data base 7, 7'. Herein, the processed data is encoded utilizing protocol buffer encoding.

The data streams are buffered by the data management devices 1, 1' using RAM data storage allowing to quickly store and retrieve the data to easily adapt the processing of said data as required. Herein, one data management device 1 utilizes a circular buffer for 80% of the data streams. The remaining data streams are buffered using a linear buffer. The second data management device 1' utilizes circular buffers for all data streams. While the performance of the second data management device 1' is further improved the performance of the first data management device 1 is still satisfying based on the lower amount of data provided and the higher RAM data storage available for said data management device 1. It is planned to further upgrade the industrial power plant 3 and the interrelated components including to change all buffers to circular buffers for the future.

The circular buffers of both data management devices 1, 1' are self-maintaining circular buffers. Herein, the buffers as limited to buffer a defined time interval, wherein the interval is further adapted to be eventually reduced in the case the unused RAM data storage falls below 5% of the available RAM data storage.

The data management device 1, 1' are communicating with each other as well as forward the data in binary format to the analytical device 4. Herein, the data management devices 1, 1' enable to simultaneously request the corresponding data from both industrial plants 3, 3' as required. The API used by the data management device 3, 3' is http/2 based enabling a surprisingly beneficial requesting or providing of the historical data. The data is forwarded directly from data management device 1 and data management device 1' without requiring to first forward the required data to a single location. In this context, the data management devices 1, 1' and the analytical device exchange certificates before transmitting data to ensure that the data safety is secured.

The present invention was only described in further detail for explanatory purposes. However, the invention is not to be understood being limited to these embodiments as they represent embodiments providing benefits to solve specific problems or fulfilling specific needs. The scope of the protection should be understood to be only limited by the claims attached.

## Claims

1. Method of processing data streams of at least two continuous flow engines and/or data streams of a battery-based power storage facility containing at least 10 battery arrangements utilizing a data management device (1, 1') containing a processing unit and a data storage, wherein the at least 10 battery arrangements are working independently from each other to provide the required power, wherein
- the at least two continuous flow engines and/or the at least 10 battery arrangements provide data streams provide data streams to be analyzed,
- the data management device (1, 1') retrieves the data streams of the at least two continuous flow engines and/or the at least 10 battery arrangements and stores data of the data streams as historical data on a data storage,
- the data management device (1, 1') upon request forwards historical data, wherein the historical data is forwarded in a binary format.

2. Method according to any of the aforementioned claims, wherein the data streams are buffered in RAM data storage of the data management device (1, 1').

3. Method according to any of the aforementioned claims, wherein at least one data stream of each continuous flow engine and/or the data streams of the battery-based power storage facility are buffered in reserved RAM data storage areas of the data management device (1, 1').

4. Method according to any of the aforementioned claims, wherein a circular buffer is used for buffering the data streams.

5. Method according to claim 4, wherein the circular buffer is a self-maintaining circular buffer.

6. Method according to any of the aforementioned claims, wherein the historical data is at least partially cached by the data management device (1, 1').

7. Method according to any of the aforementioned claims, wherein the historical data being stored on the data storage contains historical sensor data, wherein the historical sensor data is at least partially protected against tampering.

8. Method according to any of the aforementioned claims, wherein the historical data is stored in a binary format on the data storage.

9. Method according to any of the aforementioned claims, wherein the historical data is stored in at least two data formats, preferably wherein one format is a time series data format, more preferred timescale time series data format.

10. Method according to any of the aforementioned claims, wherein the data management device (1, 1') utilizes a http/2 based application programming interface (API) to request the historical data.

11. Method according to any of the aforementioned claims, wherein the data management device (1, 1') forwards the historical data to a further data management device (1, 1') receiving data streams from different continuous flow engines.

12. Method according to any of the aforementioned claims, wherein the at least two continuous flow engines contain at least two, more preferred at least four, even more preferred at least seven, gas turbines.

13. Data management device (1, 1') containing a processing unit and at least one data storage, wherein the data management device (1, 1') is adapted to realize a method according to any of claims 1 to 12,
wherein the data management device (1, 1') contains a processing unit and a data storage,
wherein the data storage contains an API being adapted to output data in a binary format.

14. System containing at least two data management device (1, 1')s according to claim 13, wherein the at least two data management device (1, 1')s are adapted to exchange historical data.

15. Computer program product, tangibly embodied in a machine-readable storage medium, including instructions operable to cause a data management device (1, 1') according to claim 13 to execute a method according to any of claims 1 to 12.
